(19) Europäisches Patentamt

European Patent Office

Office européen des brevets

(11) **EP 1 037 377 A2**

(12) **EUROPÄISCHE PATENTANMELDUNG**

(43) Veröffentlichungstag:
   **20.09.2000 Patentblatt 2000/38**

(51) Int. Cl.[7]: **H02P 21/00**

(21) Anmeldenummer: **00104099.7**

(22) Anmeldetag: **28.02.2000**

(84) Benannte Vertragsstaaten:
   **AT BE CH CY DE DK ES FI FR GB GR IE IT LI LU MC NL PT SE**
   Benannte Erstreckungsstaaten:
   **AL LT LV MK RO SI**

(30) Priorität: **10.03.1999 DE 19910608**

(71) Anmelder:
   **SIEMENS AKTIENGESELLSCHAFT**
   **80333 München (DE)**

(72) Erfinder:
   **Koch, Stefan, Dipl.-Ing.**
   **91466 Gerhardshofen (DE)**

(54) **Verfahren und Vorrichtung zur Bestimmung einer Drehzahl bei betragsmässig kleinen Statorfrequenzen einer drehgeberlosen, feldorientiert betriebenen Drehfeldmaschine**

(57) Die Erfindung bezieht sich auf ein Verfahren und eine Vorrichtung zur Bestimmung einer Drehzahl bei betragsmäßig kleinen Statorfrequenzen ($n_s$) einer drehgeberlosen, feldorientiert betriebenen Drehfeldmaschine (DM) mit einer Signalverarbeitung (2), die ein vollständiges Maschinenmodell enthält, mit dem Modellgrößen

$$( \hat{\underline{\Psi}}_s, \hat{\underline{\Psi}}_r, \hat{\underline{\Psi}}_\mu^*, \hat{\underline{\Psi}}_\mu )$$

berechnet werden. Erfindungsgemäß wird bei kleinen Statorfrequenzen ($n_s$) ein Flußbetrags-Sollwert ($\hat{SF}$) niederfrequent moduliert, wird in Abhängigkeit von berechneten Modellgrößen

$$( \hat{\underline{\Psi}}_s, \hat{\underline{\Psi}}_\mu^* )$$

eine Wirkmomentdifferenz ($\Delta m$) ermittelt, und wird in Abhängigkeit dieser Wirkmomentdifferenz ($\Delta m$), eines Statorflußbetrages

$$( |\hat{\underline{\Psi}}_\mu| )$$

und seines Mittelwertes

$$( \overline{|\hat{\underline{\Psi}}_\mu|} )$$

ein Drehzahlkorrekturwert ($\hat{n}_k$) bestimmt, der einer ermittelten Drehzahl ($\hat{n}'$) aufaddiert wird. Somit erhält man ein einfaches Verfahren zur Bestimmung einer Drehzahl bei betragsmäßig kleinen Statorfrequenz ($n_s$).

FIG 1

EP 1 037 377 A2

**Beschreibung**

Die Erfindung bezieht sich auf ein Verfahren zur Bestimmung einer Drehzahl gemäß Oberbegriff des Anspruchs 1 und auf eine Vorrichtung zur Bestimmung einer Drehzahl gemäß Oberbegriff des Anspruchs 7.

Ein Verfahren gemäß Oberbegriff des Anspruchs 1 und eine Vorrichtung gemäß Oberbegriffs des Anspruchs 7 ist aus der DE 197 03 248 A1, insbesondere der FIG 2, bekannt. In dieser Offenlegungsschrift wird ein Verfahren offenbart, mit dem störende Abhängigkeiten eines stationären Übertragungsfaktors von Betriebsparametern Stator- und Rotorfrequenz erheblich verringert werden sollen. Der stationäre Übertragungsfaktor gibt das Verhältnis von Imaginäranteil eines betriebspunktabhängig aufbereiteten und an einem Bezugsraumzeiger orientierten Differenzstromraumzeigers zur normierten Drehzahldifferenz im stationären Betrieb an. Dazu wird als konjugiert komplexer Bezugsraumzeiger der konjugiert komplexe normierte Rotorflußraumzeiger geteilt durch seinen Betragsquadrat vorgesehen. Außerdem sind der Statorstrom-Modellraumzeiger und - Istraumzeiger jeweils normiert und aus diesen normierten Raumzeigern wird ein Differenzstrom-Raumzeiger gebildet, der dann betriebspunktabhängig aufbereitet wird. Dieser betriebspunktabhängig aufbereitete Differenzstrom-Raumzeiger wird anschließend in das Bezugssystem transformiert. Der Imaginäranteil dieses transformierten betriebspunktabhängig aufbereiteten Differenzstrom-Raumzeigers wird zur Adaption der normierten Drehzahl verwendet, wobei der Realanteil dieses transformierten betriebspunktabhängig aufbereiteten Differenzstrom-Raumzeigers zur Adaption des Systemparameters Statorwiderstand dient. Sobald der Imaginäranteil und/oder der Realanteil des transformierten betriebspunktabhängig aufbereiteten Differenzstrom-Raumzeigers zu Null geregelt sind, ist die Adaption abgeschlossen. Die Güte der Verringerung der Abhängigkeit des stationären Übertragungsfaktors von Betriebsparametern Stator- und Rotorfrequenz hängt davon ab, wie der normierte Differenzstrom-Raumzeiger vor der Transformation in das Rotorfluß-Bezugssystem aufbereitet wird.

Aus der DE 196 46 457 A1 ist ein Verfahren und eine Vorrichtung zur Bestimmung einer Drehzahl einer geberlosen, feldorientiert betriebenen Drehfeldmaschine bekannt, mit dem ausgehend von einer Statorfrequenz Null bei extrem langsamer Änderung der Drehzahl die Modell-Rotorwinkelgeschwindigkeit adaptiert wird. In einem Frequenzbereich der Modell-Ständerfrequenz um Frequenz Null wird der Signalverarbeitung ein niederfrequent moduliertes Flußbetragssignal zugeführt. Die Amplitude dieser Statorflußbetragsmodulation wird dabei so festgelegt, daß das mit dem niedrigsten Wert des modulierten Statorflusses erreichbare Drehmoment immer noch höher ist als das beispielsweise in der Traktion bei diesen Statorfrequenzen üblicherweise geforderte maximale Drehmoment bei Nennstatorfluß. Die Frequenz der Flußbetragsmodulation muß dabei zur Vermeidung von Torsionsschwingungen so gewählt werden, daß sie deutlich kleiner als die niedrigste mechanische Resonanzfrequenz des Antriebsstranges ist. Diese liegt beispielsweise in der Traktion für Hochleistungslokomotiven im Bereich von 20 Hz. Ferner sollten Stromverdrängungseffekte im Rotor vermieden werden. Aus diesen Gründen ist es zweckmäßig, z.B. für die Frequenz der Flußbetragsmodulation 5 Hz zu wählen. Im Falle einer Differenz zwischen der identifizierten Drehzahl und der Drehzahl der Drehfeldmaschine tritt aufgrund der Statorflußbetragsmodulation eine von Null verschiedene Regelabweichung der Momenten-Blindgrößen in den parallel zur Transformationsgröße gerichteten Statorströmen zwischen Modell und Maschine auf, die dabei einer mit Flußmodulationsfrequenz schwingenden Wechselgröße entspricht. Der Spitzenwert dieser Wechselgröße hängt dabei zum einen von der gewählten Amplitude und der Frequenz der Statorflußbetragsmodulation ab, aber zum anderen auch maßgeblich von der Drehzahlabweichung zwischen Maschine und Modell. Je größer der Drehzahlfehler ist, um so größer ist der auftretende Spitzenwert der Regelabweichung der Momenten-Blindgrößen, so daß der Spitzenwert eine zusätzliche Information zur Drehzahlermittlung liefert. Die Information über das Vorzeichen der Drehzahlabweichung ist hier noch nicht enthalten.

Eine auftretende Regelabweichung der Momenten-Wirkgrößen, die im Fall einer Drehzahldifferenz zwischen Modell und Maschine bei Flußbetragsmodulation ebenfalls einer mit der Modulationsfrequenz pulsierenden Wechselgröße entspricht, wird durch den Ausgleichsregler der Vorrichtung ausgeregelt und als pulsierende Drehzahl interpretiert. Diese beobachtete Drehkreisfrequenz setzt sich dann im allgemeinen aus einem Gleichanteil (Mittelwert) und einen überlagerten Wechselanteil zusammen. Der Wechselanteil, der der identifizierten mittleren Drehzahl überlagert ist, eilt in Abhängigkeit von der auftretenden Drehzahldifferenz zwischen Modell und Maschine der auftretenden Regelabweichung der Momenten-Blindgrößen einmal nach und einmal vor. Das Vorzeichen dieses Phasenwinkels zwischen dieser Regelabweichung der MomentenBlindgrößen und dem überlagerten Wechselanteil der beobachteten Drehkreisfrequenz, der über eine Periode der Statorflußbetragsmodulation mit bekannten Methoden ermittelt wird, liefert somit in eindeutiger Weise die Information, ob die identifizierte Drehzahl zu groß oder zu klein ist. Ist dieser Phasenwinkel kleiner Null, so eilt der Wechselanteil der beobachteten Drehkreisfrequenz der Regelabweichung der Momenten-Blindgrößen nach. Daraus folgt, daß die beobachtete Drehkreisfrequenz erhöht werden muß. Ist der Winkel größer Null, so eilt der überlagerte Wechselanteil der beobachteten Drehkreisfrequenz der Regelabweichung der Momenten-Blindgrößen vor, wodurch die beobachtete Drehkreisfrequenz erniedrigt werden muß. Der ermittelte Spitzenwert der Regelabweichung der Momenten-Blindgrößen ist ein Maß für die vorhandene absolute Abweichung zwischen der identifizierten Drehzahl und der Maschinendrehzahl, so daß mit Hilfe des Ausgleichsreglers der Vorrichtung die Wechselgröße dieser Regelabweichung der Momenten-Blindgrößen ausgeregelt werden kann, wobei das Vorzeichen des Phasenwinkeis den Regelsinn bestimmt.

Es wurde nun festgestellt, daß das aus der DE 196 46 457 A1 bekannte Verfahren zur Bestimmung einer Drehzahl einer geberlosen, feldorientiert betriebenen Drehfeldmaschine nicht mit dem aus der DE 197 03 248 A1 bekannten Verfahren kombiniert werden konnte, da die betriebspunktabhängige Aufbereitung des ermittelten Differenzstrom-Raumzeigers die Phasenbeziehung zwischen Modulationsfrequenz und Wechselanteil der beobachteten Drehzahl verfälscht. Dadurch ist die Auswertung der Flußbetragsmodulation vom Drehzahlidentifikationsverfahren abhängig.

Der Erfindung liegt nun die Aufgabe zugrunde, ein Verfahren und eine Vorrichtung zur Bestimmung einer Drehzahl bei betragsmäßig kleinen Statorfrequenzen einer drehgeberlosen, feldorientiert betriebenen Drehfeldmaschine anzugeben, bei dem die zuvor genannten Nachteile nicht mehr auftreten.

Diese Aufgabe wird erfindungsgemäß mit den kennzeichnenden Merkmalen des Anspruchs 1 bzw. 10 gelöst.

Dadurch, daß bei betragsmäßig kleinen Statorfrequenzen der Imaginäranteil des transformierten aufbereiteten bezogenen Differenzstrom-Raumzeigers ausgeblendet wird und daß in Abhängigkeit der normierten Statorstrom-Modellraumzeiger und -Istraumzeiger und eines konjugiert komplexen Raumzeigers der Statorflußverkettung eine Wirkmomentdifferenz bestimmt wird, ist die Auswertung der Flußbetragsmodulation vom Drehzahlidentifikationsverfahren unabhängig. Die Auswertung der Flußbetragsmodulation wird mittels einer Wirkmomentdifferenz und eines ermittelten Flußbetrages und seines ermittelten Mittelwertes durchgeführt. Als Ergebnis erhält man eine Drehzahlkorrektur, die einer ermittelten Drehzahl überlagert wird.

Durch das erfindungsgemäße Verfahren ist die Auswertung der Flußbetragsmodulation vom Drehzahlidentifikationsverfahren entkoppelt, so daß beide Verfahrensteile getrennt optimiert werden können. Beim erfindungsgemäßen Verfahren zur Bestimmung einer Drehzahl wird die Drehzahl gemäß dem aus der DE 197 03 248 A1 bekannten Verfahren identifiziert, wogegen der Gebrauch der Flußbetragsmodulation gemäß der DE 196 46 457 A1 verwendet wird, wobei die Auswertung gemäß der Erfindung durchgeführt wird.

Somit erhält man ein Verfahren zur Bestimmung einer Drehzahl einer drehgeberlosen, feldorientiert betriebenen Drehfeldmaschine selbst bei betragsmäßig kleinen Statorfrequenzen, das eine einfache Signalverarbeitung aufweist und keine speziellen Anforderungen an die Eigenschaften von Drehfeldmaschine oder Pulsumrichter stellt.

Vorteilhafte Ausgestaltungen sind den Unteransprüchen 2 bis 6 zu entnehmen.

Bei einer Vorrichung zur Bestimmung einer Drehzahl bei betragsmäßig kleinen Statorfrequenzen einer drehgeberlosen, feldorientiert betriebenen Drehfeldmaschine ist der Signalverarbeitung eine Vorrichtung zur Berechnung einer Wirkmomentdifferenz, ein Betragsbildner mit nachgeschaltetem Mittelwertbildner, eine Einrichtung zur Bestimmung einer Drehzahlkorrektur und ein Addierer nachgeschaltet und die Aufschaltung eines ermittelten Imaginäranteils eines aufbereiteten transformierten Differenzstrom-Raumzeigers erfolgt bei betragsmäßig kleinen Statorfrequenzen mittels eines Begrenzers. Bei dieser Erweiterung der Signalverarbeitung sind die Ausgänge der Vorrichtung zur Berechnung einer Wirkmomentdifferenz, des Betragsbildners und des Mittelwertbildners mit jeweils einem Eingang der Einrichtung zur Bestimmung einer Drehzahlkorrektur verbunden, wobei deren Ausgang mittels des Addierers auf den Ausgang des Ausgleichsreglers aufgeschaltet ist. Durch diese Ergänzungsschaltung ist die aus der DE 197 03 248 A1 bekannte Vorrichtung zur Bestimmung einer Drehzahl derart modifiziert, daß auch die Drehzahl bei einer betragsmäßig kleinen Statorfrequenz einer geberlosen, feldorientiert betriebenen Drehfeldmaschine bestimmt werden kann.

Bei einer vorteilhaften Ausführungsform ist diese Ergänzungsschaltung durch einen Signalprozessor bzw. durch eine Software realisiert, die im Prozessor der Signalverarbeitung implementiert ist.

Vorteilhafte Ausgestaltungen der Vorrichtung sind den Unteransprüchen 8 bis 11 zu entnehmen.

Zur weiteren Erläuterung der Erfindung wird auf die Zeichnung Bezug genommen, in der ein Ausführungsbeispiel einer Vorrichtung zur Bestimmung einer Drehzahl bei betragsmäßig kleinen Statorfrequenzen einer drehgeberlosen, feldorientiert betriebenen Drehfeldmaschine schematisch veranschaulicht ist.

FIG 1      zeigt ein Blockschaltbild einer Ausführungsform einer erfindungsgemäßen Vorrichtung, die

FIG 2      zeigt ein Blockschaltbild eines bekannten vollständigen Maschinenmodells, in der

FIG 3      sind in einem komplexen Koordinatensystem Raumzeiger von Modell und Maschine in Betrieb bei stationärer Drehzahldifferenz kleiner Null dargestellt, die

FIG 4      zeigt ein Blockschaltbild einer Ausführungsform einer Einrichtung zur Bestimmung einer Drehzahlkorrektur, wobei die

FIG 5      ein Blockschaltbild einer Ausführungsform einer Vorrichtung zur Berrechnung einer Wirkmomentdifferenz zeigt und in der

FIG 6      ist in einem Diagramm über die Zeit t ein Reversiervorgang im Leerlauf mit Flußbetragsmodulation dargestellt.

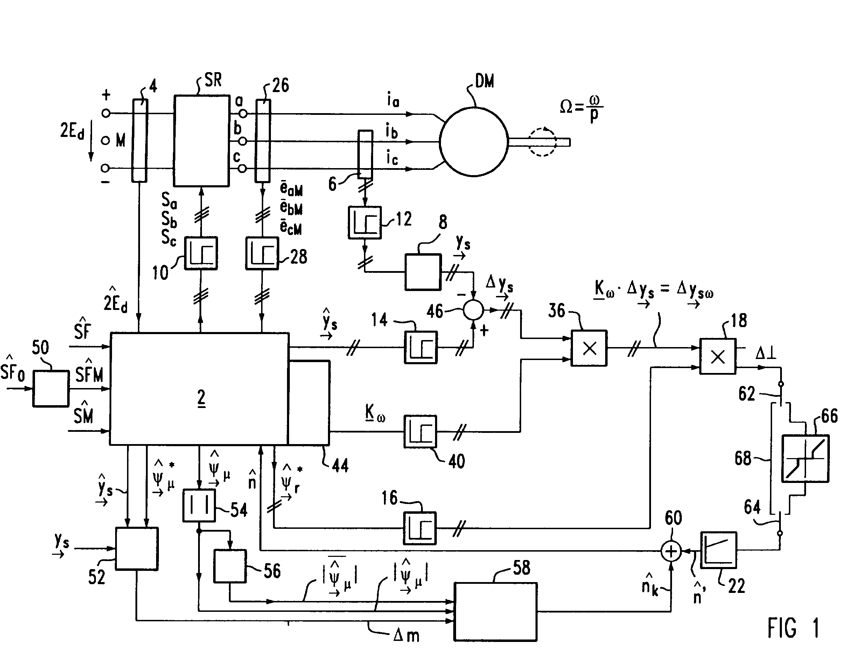

Die FIG 1 zeigt ein Blockschaltbild einer Ausführungsform einer erfindungsgemäßen Vorrichtung, wobei ein überwiegender Teil dieser Ausführungsform aus der DE 197 03 248 A1 bekannt ist. Bei dieser Ausführungsform werden bezogene Größen verwendet, die man dadurch erhält, daß durch eine entsprechende Bezugsgröße dividiert wird. Die nachfolgende Tabelle gibt eine Übersicht über die verwendeten Bezugsgrößen an:

| Physik. Größe | Bezugsgröße | Normierte Größe |
|---|---|---|
| Spannung | $U_* = \hat{u}_{s0} = \frac{4}{\pi} \cdot E_{do}$ | $v = \frac{u}{U_*}$ |
| Fluß | $\Psi_* = \hat{\Psi}_{\mu0}$ | $\psi = \frac{\Psi}{\Psi_*}$ |
| Strom | $I_* = \frac{\Psi_*}{L_{\sigma0}}$ | $y = \frac{i}{I_*}$ |
| Moment | $M_* = \frac{3}{4} \cdot \Psi_* \cdot I_*$ | $m = \frac{M}{M_*}$ |
| Kreisfrequenz Winkel-geschwindigkeit | $\omega_* = \omega_{\sigma0} = \frac{R_{r0}}{L_{\sigma0}} = \frac{1}{T_*}$ | $n = \frac{\omega}{\omega_*}$ |
| Zeit | $T_* = T_{\sigma0} = \frac{L_{\sigma0}}{R_{r0}} = \frac{1}{\omega_*}$ | $\tau = \frac{t}{T_*}$ |
| Induktivität | $L_* = L_{\sigma0} = \frac{\Psi_*}{I_*}$ | $l = \frac{L}{L_*}$ |
| Widerstand | $R_* = R_{r0} = \frac{\omega_* \Psi_*}{I_*}$ | $r = \frac{R}{R_*}$ |

Die jeweiligen normierten Größen ergeben sich aus dem Quotient von physikalischer Größe und Bezugsgröße. Diese Bezugsgrößen sind durch den Index $*$ am Formelzeichen gekennzeichnet. Außerdem sind die normierten Größen durch einen kleinen Buchstaben gekennzeichnet. Ferner sind die Modellgrößen durch ein Dach und konjugiert komplexe Größen durch den Exponent $*$ gekennzeichnet.

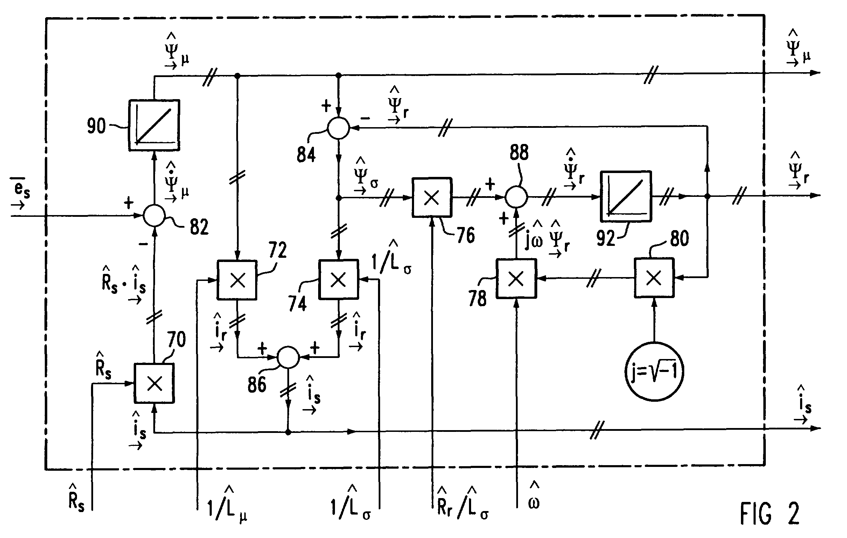

Der bekannte Teil der Vorrichtung umfaßt eine Drehfeldmaschine DM, die von einem Pulsstromrichter SR gespeist wird. Eingangsseitig steht am Pulsstromrichter SR eine Gleichspannung $2E_d$, auch als Zwischenkreis-Gleichspannung bezeichnet, an. Der Pulsstromrichter SR erhält von einer Signalverarbeitung 2 Steuersignale $S_a, S_b, S_c$. Außerdem gehören zum bekannten Teil dieser Vorrichtung Meßglieder 4,6,26, Totzeitglieder 10,12,14,16,28,40, ein Koordinatenwandler 8, eine Vergleichseinrichtung 46, zwei Multiplizierer 36,18 und ein Ausgleichsregler 22. Die Signalverarbeitung 2, die unter anderem ein vollständiges Maschinenmodell, das näher in der FIG 2 dargestellt ist, und einen Modulator enthält, ist ausgangsseitig mittels des Totzeitgliedes 10 mit dem Pulsstromrichter SR, mittels des Totzeitgliedes 14 mit einem Eingang der Vergleichseinrichtung 46 verknüpft. Der Koordinatenwandler 8 ist eingangsseitig über das Totzeitglied 12 mit dem Meßglied 6 und ausgangsseitig mit einem weiteren Eingang der Vergleichseinrichtung 46 verbunden. Eingangsseitig ist die Signalverarbeitung 2 mittels des Totzeitgliedes 28 mit dem Meßglied 26 und direkt mit dem Meßglied 4 verbunden. Der Ausgang der Vergleichseinrichtung 46 ist mit einem Eingang des Multiplizierers 36 verbunden, wobei sein zweiter Eingang mit dem Ausgang des Totzeitgliedes 40 verknüpft ist, an dessen Eingang ein komplexer Faktor $\underline{K}_\omega$ ansteht. Die Vergleichseinrichtung 46 bildet aus den anstehenden normierten Statorstrom-Modellraumzeiger

$$\hat{\underline{Y}}_s$$

und -Istraumzeiger $\underline{y}_s$ einen normierten Differenzstrom-Raumzeiger $\Delta\underline{y}_s$. Dieser normierte Differenzstrom-Raumzeiger $\Delta\underline{y}_s$ wird mittels des Multiplizierers 36 und des komplexen Faktors $\underline{K}_\omega$ betriebspunktabhängig aufbereitet. Dieser betriebspunktabhängig aufbereitete normierte Differenzstrom-Raumzeiger $\Delta\underline{y}_{s\omega}$ wird mittels des Multiplizierers 18 und eines berechneten normierten konjugierten komplexen Raumzeigers

$$\hat{\underline{\Psi}}_r^*$$

der Rotorflußverkettung in ein rotorflußbezogenes Bezugssystem transformiert. Der Imaginäranteil $\triangle\perp$ des transformierten betriebspunktabhängig aufbereiteten normierten Differenzstrom-Raumzeigers $\triangle\underline{y}_{s\omega}$ wird dem Ausgleichsregler 22 zugeführt, der ausgangsseitig bei der aus der DE 197 03 248 A1 bekannten Vorrichtung direkt mit der Signalverarbeitung 2 verknüpft ist. Zur Berechnung des komplexen Faktors $\underline{K}_\omega$, mit dem eine betriebspunktabhängige Bearbeitung des normierten Differenzstrom-Raumzeigers $\triangle\underline{y}_s$ vorgenommen wird, ist die Signalverarbeitung 2 mit einer Einrichtung 44 verbunden. Die Vorschriften zur Berechnung des komplexen Faktors $\underline{K}_\omega$ sind in der DE 197 03 248 A1 ausführlich angegeben und deren Wirkungen ausführlich beschrieben, so daß an dieser Stelle ebenso darauf verzichtet werden kann. Außerdem ist die Wirkungsweise dieser bekannten Vorrichtung ausführlich in der deutschen Patentanmeldung 197 03 248 beschrieben worden, so daß an dieser Stelle darauf verzichtet werden kann. Diese bekannte Vorrichtung ist nun, wie im folgenden beschrieben wird, zur erfindungsgemäßen Vorrichtung erweitert worden:

Wie dieser Darstellung zu entnehmen ist, ist der Signalverarbeitung 2 ein Signalgeber 50 vorgeschaltet, an dessen Eingang ein Wert eines Nennstatorflusses $\hat{SF}_0$ der Drehzahlmaschine DM ansteht. Ausgangsseitig steht ein niederfrequent moduliertes Flußbetragssignal

$$\hat{SFM}$$

an, das entsprechend der Beziehung:

$$\hat{SFM}^2 = \left[0{,}72 + 0{,}28 \cdot \sin(\omega_m \cdot t)\right] \cdot \hat{SF}_0^2$$

oder entsprechend der Beziehung

$$\hat{SFM} = \left[87{,}5\% + 12{,}5\% \cdot \sin(\omega_m \cdot t)\right] \cdot \hat{SF}_0$$

berechnet wird. Welche Beziehung im Signalgeber 50 verwendet wird, hängt davon ab, ob die Signalverarbeitung 2 radizieren kann oder nicht.

Außerdem sind der Signalverarbeitung 2 eine Vorrichtung 52 zur Berechnung einer Wirkmomentdifferenz $\triangle m$, ein Betragsbildner 54, ein Mittelwertbildner 56 und eine Einrichtung 58 zur Bestimmung einer Drehzahlkorrektur $\hat{n}_k$ nachgeschaltet. Die Signalverarbeitung 2 liefert der Vorrichtung 52 einerseits einen konjugiert komplexen Raumzeiger

$$\hat{\underline{\Psi}}_\mu^*$$

der Statorflußverkettung und einen normierten Statorstrom-Modellraumzeiger

$$\hat{\underline{Y}}_s \cdot$$

An einem zweiten Eingang dieser Vorrichtung 52 steht ein normierter Statorstrom-Istraumzeiger $\underline{y}_s$ an. Anstelle dieser normierten Raumzeiger

$$\hat{\underline{Y}}_s$$

und $\underline{y}_s$ können auch die Statorstrom-Modellraumzeiger

$$\hat{\underline{i}}_s$$

und -Istraumzeiger $\underline{i}_s$ verwendet werden, ohne daß sich am Ergebnis prinzipiell etwas ändert. Die Signalverarbeitung 2 liefert außerdem an den Betragsbildner 54 einen komplexen Statorfluß-Raumzeiger

$$\hat{\underline{\Psi}}_\mu \;.$$

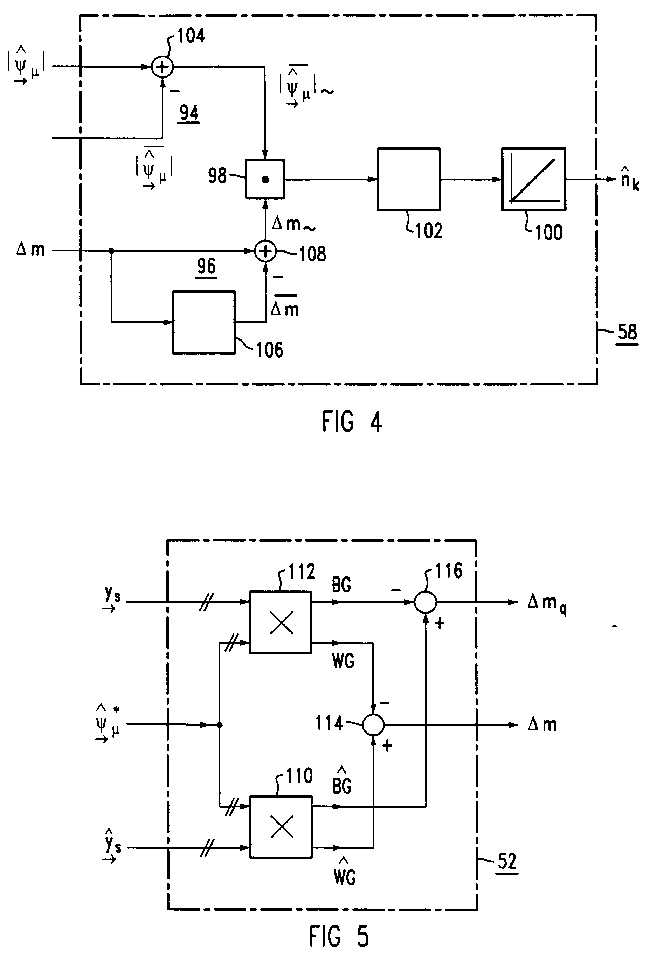

Eine Ausführungsform der Vorrichtung 52 ist in der FIG 5 näher dargestellt.

Die Ausgänge der Vorrichtung 52 zur Berechnung einer Wirkmomentdifferenz $\Delta m$, des Betragsbildners 54 und des Mittelwertbildners 56 sind jeweils mit einem Eingang der Einrichtung 58 zur Bestimmung einer Drehzahlkorrektur $\hat{n}_k$ verknüpft. Der Ausgang des Betragsbildners 54 ist außerdem mit einem Eingang des Mittelwertbildners 56 verbunden. Der Ausgang der Einrichtung 58, von der eine Ausführungsform in der FIG 4 näher dargestellt ist, ist mit einem Eingang des Addierers 60 verknüpft, wobei sein zweiter Eingang mit dem Ausgang des Ausgleichsreglers 22 verbunden ist. Der Addierer 60 ist ausgangsseitig mit einem Parameter-Eingang für die Drehzahl $\hat{n}$ der Signalverarbeitung 2 verknüpft.

Ferner sind in der Verbindung zwischen dem Ausgang des Multiplizierers 18 und dem Eingang des Ausgleichsreglers 22 zwei Umschalter 62 und 64 angeordnet. Parallel dazu ist ein Begrenzer 66 angeordnet, der eingangsseitig mit einem Anschluß des Umschalters 62 und ausgangsseitig mit einem Anschluß des Umschalters 64 verbunden ist. Mittels dieser Umschalter 62 und 64 wird entweder der Multiplizierer 18 ausgangsseitig direkt oder über den Begrenzer 66 mit dem Eingang des Ausgleichsreglers 22 verknüpft. Diese Umschalter 62 und 64 werden in Abhängigkeit der Statorfrequenzzahl $n_s$ in Bezug auf einen Statorfrequenzzahl-Grenzwert $n_{krit}$ gesteuert. Sobald die Statorfrequenzzahl $n_s$ kleiner als der StatorfrequenzzahlGrenzwert $n_{krit}$ wird, ist der Begrenzer 66 wirksam. Ist die Statorfrequenzzahl $n_s$ betragsmäßig größer oder gleich dieses vorbestimmten Statorfrequenzzahl-Grenzwertes $n_{krit}$, wird die Verbindungsleitung 68 zugeschaltet.

Die Signalverarbeitung 2 enthält unter anderem ein vollständiges Maschinenmodell und einen Modulator. Die FIG 2 zeigt ein Blockschaltbild eines aus der deutschen Offenlegungsschrift 195 31 771 bekannten vollständigen Maschinenmodells. Dieses vollständige Maschinenmodell weist mehrere Multiplizierer 70,72,74,76,78 und 80, zwei Vergleicher 82 und 84, zwei Addierglieder 86 und 88 und zwei Integrierglieder 90 und 92 auf. Diesem vollständigen Maschinenmodell werden zwei Eingangsgrößen, nämlich ein Stromrichter-Ausgangsspannungs-Raumzeiger

$$\overline{\underline{e}}_s$$

und ein Schätzwert $\hat{\omega}$ der Winkelgeschwindigkeit und die Systemparameter Statorwiderstand $\hat{R}_s$, Rotorwiderstand $\hat{R}_r$, Magnetisierungsinduktivität $\hat{L}_\mu$ und Streuinduktivität $\hat{L}_\sigma$ zugeführt. Aus diesen Vorgabewerten (Modellgrößen) berechnet das vollständige Maschinenmodell die Raumzeiger der Statorflußverkettung

$$\hat{\underline{\Psi}}_\mu \;,$$

der Rotorflußverkettung

$$\hat{\underline{\Psi}}_r$$

und des Statormodellstromes

$$\hat{\underline{i}}_s \;.$$

Der Statorstrom-Modellraumzeiger

$$\hat{\underline{i}}_s$$

wird zur Berechnung von Schaltvariablen $S_a, S_b, S_c$ mittels eines nicht näher dargestellten Modulators der Signalverarbeitung 2 verwendet, wobei die inneren stromabhängigen Spannungsabfälle des Stromrichters SR berücksichtigt werden können.

Da in der Vorrichtung gemäß FIG 1 die konjugiert komplexen Raumzeiger der Statorflußverkettung

$$\hat{\underline{\Psi}}_\mu^*$$

und der Rotorflußverkettung

$$\hat{\underline{\Psi}}_r^*$$

verwendet werden, müssen die ermittelten Raumzeiger der Statorflußverkettung

$$\hat{\underline{\Psi}}_\mu$$

und der Rotorflußverkettung

$$\hat{\underline{\Psi}}_r$$

in konjugiert komplexer Raumzeiger gewandelt werden. Außerdem werden in der Vorrichtung gemäß FIG 1 normierte Größen verwendet, wogegen im vollständigen Maschinenmodell keine normierten Größen verwendet werden. Deshalb weist die Signalverarbeitung 2 Mittel zur Umrechnung von normierten Größen in nicht normierte Größen und Mittel zur Bestimmung von normierten Größen auf. Die in der Tabelle hinterlegten normierten Größen und Bezugsgrößen sind in der Signalverarbeitung 2 hinterlegt und werden bei der Umrechnung bzw. bei der Generierung konjugiert komplexer Größen verwendet. Da in der deutschen Patentanmeldung 195 31 771 dieses vollständige Maschinenmodell ausführlich beschrieben ist, wird an dieser Stelle auf eine weitere Beschreibung dieses vollständigen Maschinenmodells verzichtet.

Im folgenden soll stark vereinfacht das Zustandekommen der modulationsfrequenten Statorstromänderung bei Flußbetragsmodulation für den Fall der stationären Gleicherregung beschrieben werden, die sich bei angenommener Modelldrehzahl $\hat{n} = 0$ und gefordertem Leerlauf einstellt:

Werden bei ideal gleichen Parametern von Modell- und Drehfeldmaschine DM beide bei gleicher Statorspannung

$$\overline{\underline{e}}_s$$

mit unterschiedlichen Drehzahlen $\hat{n} \neq n$ betrieben, weichen die Modellstator- und -rotorflüsse

$$\hat{\underline{\Psi}}_\mu \quad \text{und} \quad \hat{\underline{\Psi}}_r$$

von den Stator- und Rotorflüssen $\underline{\Psi}_\mu$ und $\underline{\Psi}_r$ der Drehfeldmaschine DM ab. Dies führt im allgemeinen zu einer Differenz der Statorströme

$$\hat{\underline{i}}_s$$

und $\underline{i}_s$. Betrachtet man beispielsweise den Fall, daß die stillstehende Drehfeldmaschine DM mit konstantem Strom

$$\hat{\underline{y}}_s$$

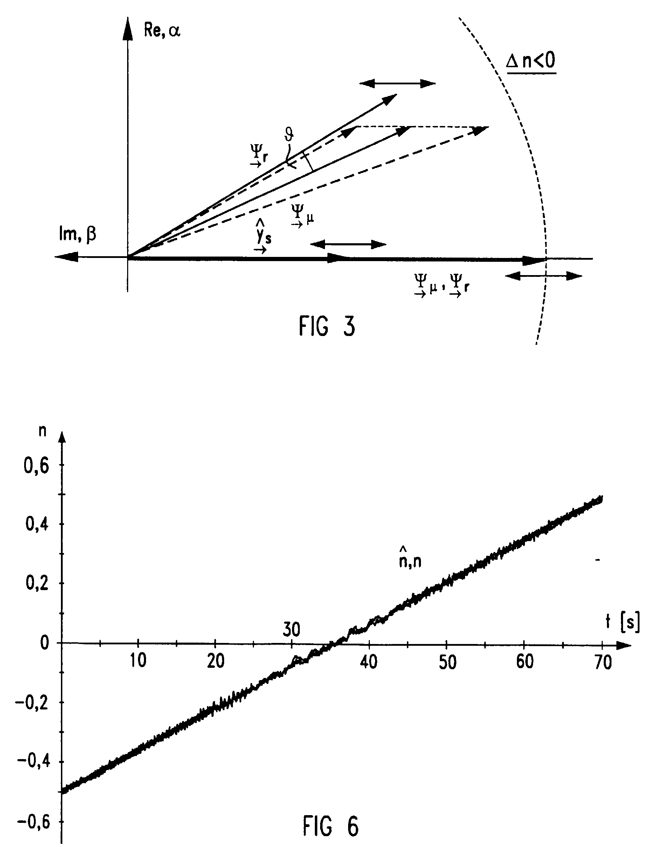

in negativer β-Richtung gemäß FIG 3 erregt wird, stimmen bei zunächst angenommener Gleichheit der Drehzahlen $\hat{n} = n = 0$ auch die Raumzeiger

$$\hat{\underline{\Psi}}_\mu \quad \text{und} \quad \hat{\underline{\Psi}}_r$$

der Modellstator- und -rotorflußverkettung ideal mit den Größen $\underline{\Psi}_\mu$ und $\underline{\Psi}_r$ der Maschine überein. Beschleunigt nun die Drehfeldmaschine DM auf eine kleine positive und konstante Drehzahl n, stellt sich nach Abklingen der Ausgleichsvorgänge der in FIG 3 gezeigte stationäre Zustand ein. Die Modellraumzeiger

$$\hat{\underline{\Psi}}_\mu \quad \text{und} \quad \hat{\underline{\Psi}}_r$$

der Stator- und Rotorflußverkettung sind unverändert. Die Drehfelämaschine DM arbeitet nun mit einer Drehzahl $n_r = -n$, deshalb sind die Raumzeiger $\underline{\Psi}_\mu$ und $\underline{\Psi}_r$ der Stator- und Rotorflußverkettung der Drehfeldmaschine DM nicht mehr identisch. Durch einen auftretenden Rotorstrom ändert sich der Magnetisierungsstrom der Drehfeldmaschine DM, wodurch als Folge der Statorfluß-Raumzeiger $\underline{\Psi}_\mu$ verkleinert wird und in mathematisch positiven Sinn gegenüber dem Statorfluß-Modellraumzeiger

$$\hat{\underline{\Psi}}_\mu$$

gedreht ist. Da in einem statorfesten $\Gamma$-Ersatzschaltbild der Drehfeldmaschine DM, beispielsweise dargestellt in der DE 195 31 771 A1, der Rotorstrom stationär ebenfalls ein Gleichstrom ist, ruft dieser keinen Spannungsabfall an der Statorinduktivität $L_\mu$ hervor. Der normierte Statorstrom-Istraumzeiger $\underline{y}_s$ der Drehfeldmaschine DM ist deshalb identisch mit dem normiertem Statorstrom-Modellraumzeiger

$$\hat{\underline{y}}_s \,.$$

Wird nun der Betrag des Statorfluß-Modellraumzeigers

$$\hat{\underline{\Psi}}_\mu$$

moduliert, in der FIG 3 durch einen waagerechten Doppelpfeil gekennzeichnet, wirkt diese Änderung im gezeigten Fall nur in Richtung der $\beta$-Achse. Würden die Drehzahlen $\hat{n}$ und n von Modell und Drehfeldmaschine DM übereinstimmen, könnten auch die Spitzen der Raumzeiger $\underline{\Psi}_\mu$ und $\underline{\Psi}_r$ der Stator- und Rotorflußverkettung der Drehfeldmaschine DM nur eine Bewegung entlang der $\beta$-Achse durchführen. Bei idealer Übereinstimmung von Modell und Drehfeldmaschine DM kann dann keine normierte Stromdifferenz $\Delta\underline{y}_s$ auftreten. Eine Differenzstromkomponente senkrecht zum Modellstatorfluß

$$\hat{\underline{\Psi}}_\mu$$

ist ohne Drehzahldifferenz $\Delta n$ also nicht möglich.

Haben die Raumzeiger $\underline{\Psi}_\mu$ und $\underline{\Psi}_r$ der Stator- und Rotorflußverkettung der Drehfeldmaschine DM die in FIG 3 gezeigte Lage, beschreibt die Spitze des Raumzeigers $\underline{\Psi}_\mu$ der Statorflußverkettung der Drehfeldmaschine DM ebenfalls eine Bewegung in $\beta$-Richtung, wie dies durch gestrichelt gezeichnete Raumzeiger dargestellt ist. Dadurch ändert sich jedoch im Gegensatz zum vorhergehenden Fall ständig sein Winkel zu dem Modellraumzeiger

$$\hat{\underline{\Psi}}_\mu$$

der Statorflußverkettung. Der Raumzeiger $\underline{\Psi}_r$ der Rotorflußverkettung der Drehfeldmaschine DM kann nur verzögert mit der Rotorstreuzeitkonstante folgen. Deshalb eilt dieser Rotorflußraumzeiger $\underline{\Psi}_r$ stets der modulationsfrequenten Änderung des Statorfluß-Raumzeigers $\underline{\Psi}_\mu$ der Drehfeldmaschine DM nach. Aufgrund der verzögerten Betragsänderung des Rotorfluß-Raumzeigers $\underline{\Psi}_r$ der Drehfeldmaschine DM beschreibt seine Spitze eine leicht elliptische Bahnkurve. Dadurch tritt in der Drehfeldmaschine DM eine Rotorstromkomponente in $\alpha$-Richtung auf, die eine modulationstrequente Differenz $\Delta m$ der mit dem Modellstatorfluß

$$\hat{\underline{\Psi}}_\mu$$

berechneten Wirkmomente $\hat{m}$ und m zur Folge hat.

Eine Wirkmomentdifferenz $\Delta m$ tritt nach obiger Beschreibung nur dann auf, wenn die Raumzeiger

$$\hat{\underline{\Psi}}_\mu$$

und $\underline{\Psi}_\mu$ der Statormodellflußverkettung und der Statorflußverkettung nicht die gleiche Lage haben. Das heißt, bei ideal parametriertem Modell kann das nur bei Vorhandensein einer Drehzahldifferenz $\Delta n = \hat{n} - n$ der Fall sein. Die Amplitude der Wirkmomentdifferenz $\Delta m$ steigt für kleine Drehzahldifferenzen $\Delta n$ mit dem Betrag der Drehzahldifferenz $\Delta n$, wobei ihre Phasenlage vom Vorzeichen der Drehzahldifferenz $\Delta n$ abhängt. Ist die Drehzahldifferenz $\Delta n$ negativ gemäß FIG 3, so ist die Wirkmomentdifferenz $\Delta m$ etwa gleichphasig zum modulationsfrequenten Wechselanteil

$$\left| \hat{\underline{\Psi}}_\mu \right|_{\sim}$$

des Statorflußbetrages

$$\left| \hat{\underline{\Psi}}_\mu \right|$$

und gegenphasig bei einer positiven Drehzahldifferenz $\Delta n$.

Bei konstanten Drehmomenten ungleich Null beschreiben die Spitzen sowohl der Modellraumzeiger

$$\hat{\underline{\Psi}}_\mu \quad \text{und} \quad \hat{\underline{\Psi}}_r$$

und als auch der Maschinenraumzeiger $\underline{\Psi}_\mu$ und $\underline{\Psi}_r$ Bahnkurven mit etwa elliptischer Form, da sich die Rotorkreisfrequenz und die wirkmomentbildende Komponente des Statorstromes senkrecht zum Statorfluß-Raumzeiger

$$\hat{\underline{\Psi}}_\mu$$

wegen der Flußbetragsänderungen ebenfalls ständig ändern. Die modulationsfrequente Maschinenstromkomponente, die bei vorhandener Drehzahldifferenz auftritt, überlagert sich dann dieser Änderung. Die Wirkmomentdifferenz $\Delta m$ zwischen Modell und Drehfeldmaschine DM ist bei nicht zu großem Winkel $\vartheta$ zwischen Stator- und Rotorfluß-Raumzeiger $\underline{\Psi}_\mu$ und $\underline{\Psi}_r$ weiter nur von der Drehzahldifferenz $\Delta n$ abhängig, deshalb bleibt die Auswertung der Testsignale im wesentlichen unabhängig vom Belastungszustand des Antriebs.

Damit das Modulationssignal möglichst große Rotorstromänderungen hervorruft und damit eine gut meßbare Statorstromänderung erzeugt, sollte seine Kreisfrequenz etwa mit der Rotorkreisfrequenz im Kippunkt übereinstimmen. Da diese bei sehr vielen Drehfeldmaschinen relativ groß ist und die Flußregelung den Statorflußbetragswert noch ohne große Verzögerung dem Sollwert nachführen sollte, wurde die Modulationsfrequenz gleich der halben Bezugsfrequenz gewählt, was etwa 5 Hz entspricht. Die Amplitude des Statorfluß-Modulationssignal ist so gewählt, daß auch bei seinem Minimalwert das verfügbare Kippmoment deutlich über dem Nominalmoment liegt. Der Maximalwert soll den Bemessungsfluß nicht überschreiten. Als Flußsollwertfunktion ergibt sich damit:

$$\hat{SFM}^2 = \left[ 0,72 + 0,28 \cdot \sin(\omega_m \cdot t) \right] \cdot \hat{SF}_0^2$$

oder entsprechend der Beziehung

$$\widehat{\mathrm{SFM}} \; = \; \left[87{,}5\,\% \, + \, 12{,}5\,\% \cdot \sin\left(\omega_m \cdot t\right)\right] \cdot \widehat{\mathrm{SF}}_0$$

Die Flußbetragsänderung stellt für die Drehmomentregelung eine Störgröße dar. Da die Eckfrequenz der Drehmomentregelung jedoch um etwa zwei Größenordnungen über der Frequenz des gewählten Modulationssignals liegt, verursacht die Testsignalaufschaltung keine merkliche Veränderung der Drehmomentenqualität. Dies gilt jedoch nur solange, wie die Drehzahlidentifikation die korrekte Drehzahl ermittelt. Tritt eine Drehzahldifferenz $\Delta n$ zwischen Modell- und Drehfeldmaschine DM auf, wird zwar das Modelldrehmoment auf den Sollwert geregelt, das Drehmoment der Maschine unterscheidet sich davon jedoch, aufgrund der anderen Lage der Maschinenflußraumzeiger durch einen anderen Mittelwert und die modulationsfrequente Wechselkomponente.

Die FIG 4 zeigt ein Blockschaltbild einer Einrichtung 58 zur Bestimmung einer Drehzahlkorrektur $\hat{n}_k$ nach FIG 1. Diese Einrichtung 58 weist eingangsseitig zwei Einrichtungen 94 und 96 zur Ermittlung von modulationsfrequenten Wechselanteilen

$$\left|\widehat{\underline{\Psi}}_\mu\right|_\sim$$

und $\Delta m_\sim$ auf, die ausgangsseitig jeweils mit einem Eingang eines Multiplizierers 98 verknüpft sind. Die Einrichtung 58 weist ausgangsseitig einen integrierenden Regler 100 auf, der eingangsseitig mittels eines gleitenden Mittelwertfilters 102 mit einem Ausgang des Multiplizierers 98 verbunden ist. Die Einrichtung 94 zur Ermittlung des modulationsfrequenten Wechselanteils

$$\left|\widehat{\underline{\Psi}}_\mu\right|_\sim$$

weist einen Vergleicher 104 auf. Am nichtinvertierenden Eingang dieses Vergleichers 104 steht ein ermittelter Statorflußbetrag

$$\left|\widehat{\underline{\Psi}}_\mu\right|$$

und an seinem invertierenden Eingang ein ermittelter Mittelwert

$$\overline{\left|\widehat{\underline{\Psi}}_\mu\right|}$$

des Statorflußbetrages

$$\left|\widehat{\underline{\Psi}}_\mu\right|$$

an. Am Ausgang dieses Vergleichers 104 steht dann der modulationsfrequente Wechselanteil

$$\left|\widehat{\underline{\Psi}}_\mu\right|_\sim$$

des Statorflußbetrages

$$\left|\hat{\underline{\Psi}}_\mu\right|$$

an. Mittels dieses Vergleichers 104 wird der ermittelte Mittelwert

$$\overline{\left|\hat{\underline{\Psi}}_\mu\right|}$$

des Statorflußbetrages

$$\left|\hat{\underline{\Psi}}_\mu\right|$$

vom aktuellen Statorflußbetrag

$$\left|\hat{\underline{\Psi}}_\mu\right|$$

subtrahiert. Bei einer vorteilhaften Ausführungsform kann als Mittelwert

$$\overline{\left|\hat{\underline{\Psi}}_\mu\right|}$$

mit ausreichender Genauigkeit der Mittelwert der Sollfunktion verwendet werden, so daß sich eine gesonderte Bestimmung erübrigt.

Die Wirkmomentdifferenz $\Delta m$ enthält bei Statorfrequenzen ungleich Null und vorhandener Drehzahldifferenz $\Delta n$ ebenfalls einen Gleichanteil $\overline{\Delta m}$. Dieser wird mittels eines gleitenden Mittelwertfilters 106, das den Mittelwert über die Dauer einer Modulationsperiode bestimmt, ermittelt. Dieser Gleichanteil $\overline{\Delta m}$ wird mittels eines weiteren Vergleichers 108 von der ermittelten Wirkmomentdifferenz $\Delta m$ subtrahiert, so daß ausgangsseitig am Vergleicher 108 der modulationsfrequente Wechselanteil $\Delta m_\sim$ der Wirkmomentdifferenz $\Delta m$ ansteht. Das gleitende Mittelwertfilter 106 und der weitere Vergleicher 108 sind Bestandteile der Einrichtung 96.

Die Multiplikation der beiden modulationsfrequenten Wechselanteile $|\underline{\psi}_\mu|_\sim$ und $\Delta m_\sim$ erzeugt ein Signal, dessen Gleichanteil je nach Phasenlage positiv oder negativ ist. Unter der Annahme, daß die Wechselanteile $|\underline{\psi}_\mu|_\sim$ und $\Delta m\sim$ sinusförmige Zeitverläufe haben, gilt:

$$\left|\underline{\psi}_\mu^s\right|_\sim \sin(\omega_{mod} \cdot t) \cdot \Delta m_\sim^s \sin(\omega_{mod} \cdot t + \delta) =$$
$$\left|\underline{\psi}_\mu^s\right|_\sim \cdot \Delta m_\sim^s \cdot \frac{1}{2}\left[\cos\delta - \cos(2\omega_{mod} \cdot t + \delta)\right]$$

Darin bezeichnet der Winkel $\delta$ die Phasenverschiebung zwischen dem Wechselanteil $\Delta m_\sim$ der Drehmomentdifferenz $\Delta m$ und der Modulation $|\underline{\psi}_\mu|_\sim$ des Statorflußbetrages $|\underline{\psi}_\mu|$. Der Exponent "s" kennzeichnet den Scheitelwert der Wechselanteile. Der Term $\cos\delta$ bestimmt das Vorzeichen des Gleichanteils. Er ist im Fall einer negativen Drehzahldifferenz $\Delta n$ und daraus resultierender Gleichphasigkeit der Wechselanteile positiv. Bei einer positiven Drehzahldifferenz $\Delta n$ und daraus resultierender Gegenphasigkeit der Wechselanteile ist er negativ. Der mit zweifacher Modulationsfrequenz schwingende Wechselanteil des ermittelten Produkts wird in einem zweiten Mittelwertfilter 102 unterdrückt, so daß ein Signal zur Verfügung steht, das bei stationärem Betrieb mit konstanter Drehzahldifferenz $\Delta n$ eine reine Gleichgröße ist. Diese Gleichgröße wird direkt als Eingangssignal des nachfolgenden integrierenden Reglers 100 verwendet, an dessen Ausgang eine Drehzahlkorrektur $\hat{n}_k$ ansteht. Da aufgrund des niederfrequenten Testsignals die Auswertung der modulationsfrequenten Drehmomentdifferenz $\Delta m$ nur eine geringe Dynamik hat, genügt als integrierender Regler 100 ein einfacher I-Regler.

Die FIG 5 zeigt ein Blockschaltbild einer Vorrichtung 52 der Vorrichtung nach FIG 1. Mittels dieser Vorrichtung 52 wird eine Wirkmomentdifferenz Δm berechnet. Dazu weist diese Vorrichtung 52 zwei Multiplizierer 110 und 112 und zwei Vergleicher 114 und 116 auf. Die Ausgänge des Multiplizierers 110 sind jeweils mit den nichtinvertierenden Eingängen der beiden Vergleicher 114 und 116 verbunden. Die Ausgänge des Multiplizierers 112 sind jeweils mit den invertierenden Eingängen dieser beiden Vergleicher 114 und 116 verknüpft. Am Ausgang des Vergleichers 114 steht die Wirkmomentdifferenz Δm an, wobei am Ausgang des Vergleichers 116 eine Blindmomentdifferenz Δmq ansteht. Diese Vorrichtung 52 ist aus der DE 195 31 771 A1 bekannt, wobei die dortige Wirkmomentdifferenz mit Δ⊥ und die dortige Blindmomentdifferenz mit Δ∥ bezeichnet sind. Damit die Wirkmomentdifferenz der Vorrichtung 52 nicht mit dem Imaginäranteil Δ⊥ des transformierten betriebspunktabhängig aufbereiteten normierten Differenzstrom-Raumzeigers $\Delta \underline{y}_{s\omega}$ verwechselt wird, ist der Klarheit wegen die Wirkmomentdifferenz hier mit Δm bezeichnet worden. Eingangsseitig dieser Vorrichtung 52 stehen ein konjugiert komplexer Raumzeiger

$$\underline{\hat{\Psi}}_{\mu}^{\star}$$

der Statorflußverkettung, ein normierter Statorstrom-Modellraumzeiger

$$\underline{\hat{y}}_{s}$$

und ein normierter Statorstrom-Raumzeiger $\underline{y}_{s}$ an. Der konjugiert komplexe Raumzeiger

$$\underline{\hat{\Psi}}_{\mu}^{\star}$$

der Statorflußverkettung wird als Transformations-Raumzeiger verwendet. Die Transformationsgrößen des Statorstrom-Istraumzeigers $\underline{y}_{s}$ und des Statorstrom-Modellraumzeigers

$$\underline{\hat{y}}_{s}$$

sind die Wirkmomente WG und $\hat{W}G$ und die Blindmomente BG und $\hat{B}G$. Ein Vergleich der Wirkmomente $\hat{W}G$ und WG ergibt die Wirkmomentdifferenz Δm, wogegen ein Vergleich der Blindmomente $\hat{B}G$ und BG die Blindmomentdifferenz Δmq ergibt.

Der Ausgleichsregler 22 regelt stets hochdynamisch den Imaginäranteil Δ⊥ des transformierten betriebspunktabhängig aufbereiteten normierten Differenzstrom-Raumzeigers $\Delta \underline{y}_{s\omega}$ zu Null. Bei kleinen Drehmomenten ist dies annähernd die Komponente, die für die Wirkmomentdifferenz Δm verantwortlich ist. Der Ausgleichsregler 22 würde stets den auszuwertenden modulationsfrequenten Wechselanteil Δm~ der Wirkmomentdifferenz Δm zu Null regeln. Um dies zu verhindern, ist gemäß FIG 1 die Regelabweichung des Ausgleichsreglers 22 begrenzt. Im Bereich sehr kleiner Statorfrequenzen $n_s$, d.h. $|n_s| < n_{krit}$, in dem die stationäre Drehzahlermittlung ohne Testsignal versagt, werden kleine Regelabweichungen in der Größenordnung der durch die Flußmodulation verursachten Signale ausgeblendet. Dadurch wird die Auswertung des modulationsfrequenten Wechselanteils Δm~ der Wirkmomentdifferenz Δm nicht mehr beeinflußt. Treten jedoch größere Regelabweichungen auf, z.B. beim schnellen Reversieren, steht die Dynamik des Ausgleichsreglers 22 unverändert zur Verfügung. Oberhalb der Grenzfrequenz $n_{krit}$ der Statorfrequenz $n_s$ wird die Ausblendung kleiner Regelabweichungen des Ausgleichsreglers 22 aufgehoben, wodurch der integrierende Regler 100 der Einrichtung 58 zur Bestimmung einer Drehzahlkorrektur $\hat{n}_k$ keine Regelabweichung mehr enthält. Er wird dadurch praktisch wirkungslos, eine gegenseitige Beeinflussung der beiden auf die gleiche Stellgröße $\hat{n}$ arbeitenden Regler 22 und 100 ist damit ausgeschlossen.

Die FIG 6 zeigt als Meßergebnis einen sehr langsamen Reversiervorgang im Leerlauf, bei dem sich die Statorfrequenz $n_s$ im Bereich -5 Hz bis +5 Hz ändert. Eine drehzahlgeregelte Lastmaschine, die mit der Drehstrommaschine DM mechanisch gekoppelt ist, prägt die Drehzahl gemäß einer rampenförmigen Sollwertänderung ein. Sollmoment und Modellmoment sind während des gesamten Versuchs konstant gleich Null und deshalb nicht dargestellt. Gemessene und identifizierte Drehzahl n und $\hat{n}$ stimmen auch bei sehr kleinen Statorfrequenzen $n_s$ gut überein. Aus der Tatsache, daß die Drehfeldmaschine DM ohne Störung nahezu ideal dem Sollwert folgt, kann geschlossen werden, daß auch das reale Drehmoment der Drehfeldmaschine DM während des gesamten Reversiervorgangs konstant Null ist.

Mit der Auswertung der niederfrequenten Statorflußbetragsmodulation ist ein Betrieb der drehgeberlosen, feldorientiert betriebenen Drehfeldmaschine DM bei beliebig kleinen Statorfrequenzen $n_s$ möglich. Dieses Verfahren

stellt keine speziellen Anforderungen an die elektrischen Eigenschaften der Drehfeldmaschine DM, es arbeitet also auch in Betriebsbereichen, in denen sich die Drehfeldmaschine DM linear verhält. Eine Einschränkung bezüglich der realisierbaren Drehmomente bzw. Drehzahlen existiert nicht.

**Patentansprüche**

1.  Verfahren zur Bestimmung einer Drehzahl ($\hat{n}$) bei betragsmäßig kleinen Statorfrequenzen ($n_s$) einer drehgeberlosen, feldorientiert betriebenen Drehfeldmaschine (DM), wobei in Abhängigkeit eines Fluß-Sollwertes ($\hat{SF}$), eines Drehmoment-Sollwertes ($\hat{SM}$), einer eingangsseitig am Pulsstromrichter (SR) der Drehfeldmaschine (DM) anstehende Gleichspannung ($2E_d$), gemessener Stromrichter-Ausgangsspannungswerte ($\overline{e}_{aM}, \overline{e}_{bM}, \overline{e}_{cM}$) und Systemparameter ($\hat{L}_\mu, \hat{L}_\sigma, \hat{R}_s, \hat{R}_r/\hat{L}_\sigma, \hat{\omega}$) ein normierter Statorstrom-Modellraumzeiger

$$(\underline{\hat{\vec{y}}}_s)$$

und ein normierter konjugiert komplexer Raumzeiger

$$(\underline{\hat{\vec{\psi}}}_r^{\,*})$$

der Rotorflußverkettung als Transformations-Raumzeiger berechnet werden, und wobei in Abhängigkeit dieses normierten Statorstrom-Modellraumzeigers

$$(\underline{\hat{\vec{y}}}_s)$$

und eines ermittelten normierten Statorstrom-Istraumzeigers ($\underline{\vec{y}}_s$) ein bezogener Differenzstrom-Raumzeiger ($\Delta\underline{\vec{y}}_s$) ermittelt, betriebspunktabhängig aufbereitet und anschließend transformiert wird, dessen Imaginäranteil ($\Delta\perp$) zu Null geregelt wird, **dadurch gekennzeichnet**, daß bei betragsmäßig kleinen Statorfrequenzen ($n_s$) als Flußbetrags-Sollwert ($\hat{SF}$) ein niederfrequent moduliertes Flußbetragssignal

$$(\hat{SFM})$$

vorgesehen ist, daß der Imaginäranteil ($\Delta\perp$) des transformierten aufbereiteten bezogenen Differenzstrom-Raumzeigers ($\Delta\underline{\vec{y}}_s\omega$) ausgeblendet wird, daß in Abhängigkeit der normierten Statorstrom-Modellraumzeiger

$$(\underline{\hat{\vec{y}}}_s)$$

und -Istraumzeiger ($\underline{\vec{y}}_s$) und eines konjugiert komplexen Raumzeigers

$$(\underline{\hat{\vec{\psi}}}_\mu^{\,*})$$

der Statorflußverkettung eine Wirkmomentdifferenz ($\Delta m$) ermittelt wird, daß aus einem berechneten Statorfluß

$$(\underline{\hat{\vec{\psi}}}_\mu)$$

ein Statorflußbetrag

$$(|\underline{\hat{\vec{\psi}}}_\mu|)$$

und dessen Mittelwert

$$( \quad \overline{\left|\hat{\underline{\Psi}}_\mu\right|} \quad )$$

ermittelt wird und daß in Abhängigkeit der Wirkmomentdifferenz (Δm), des Statorflußbetrages

$$(\left|\hat{\underline{\Psi}}_\mu\right|)$$

und seines Mittelwertes

$$( \quad \overline{\left|\hat{\underline{\Psi}}_\mu\right|} \quad )$$

eine Drehzahlkorrektur ($\hat{n}_k$) bestimmt wird, die der ermittelten Drehzahl ($\hat{n}$ ') aufaddiert wird.

**2.** Verfahren nach Anspruch 1, **dadurch gekennzeichnet**, daß zur Bestimmung der Drehzahlkorrektur ($\hat{n}_k$) jeweils ein modulationsfrequenter Wechselanteil des Statorflußbetrages

$$(\left|\hat{\underline{\Psi}}_\mu\right|_\sim)$$

und der Wirkmomentdifferenz (Δm$_\sim$) ermittelt werden, die miteinander multipliziert werden, und daß ein Wechselanteil des Produktsignals unterdrückt wird und der verbleibende Gleichanteil zu einer Drehzahlkorrektur ($\hat{n}_k$) aufintegriert wird.

**3.** Verfahren nach Anspruch 2, **dadurch gekennzeichnet**, daß zur Bestimmung eines modulationsfrequenten Wechselanteils des Statorflußbetrages

$$(\left|\hat{\underline{\Psi}}_\mu\right|_\sim)$$

der ermittelte Statorflußbetrag-Mittelwert

$$( \quad \overline{\left|\hat{\underline{\Psi}}_\mu\right|} \quad )$$

vom ermittelten Statorflußbetrag

$$(\left|\hat{\underline{\Psi}}_\mu\right|)$$

subtrahiert wird.

**4.** Verfahren nach Anspruch 2, **dadurch gekennzeichnet**, daß zur Bestimmung einer modulationsfrequenten Wirkmomentdifferenz (Δm$_\sim$) aus der ermittelten Wirkmomentdifferenz (Δm) ein Mittelwert ($\overline{\Delta m}$)gebildet wird, der anschließend von der ermittelten Wirkmomentdifferenz (Δm) subtrahiert wird.

**5.** Verfahren nach einem der Ansprüche 1 bis 4, **dadurch gekennzeichnet**, daß das niederfrequent modulierte Flußbetragssignal

$$\stackrel{\wedge}{(\text{SFM})}$$

nur zeitweise aufgeschaltet wird.

**6.** Verfahren nach einem der Ansprüche 1 bis 5, **dadurch gekennzeichnet**, daß bei der Ermittlung einer Wirkmomentdifferenz ($\Delta$m) anstelle von normierten Statorstrom-Modellraumzeiger

$$(\hat{\underline{y}}_{\text{s}})$$

und -Istraumzeiger ($\underline{y}_{\text{s}}$) ein Statorstrom-Modellraumzeiger

$$(\hat{\underline{i}}_{\text{s}})$$

und -Istraumzeiger ($\underline{i}_{\text{s}}$) verwendet werden.

**7.** Vorrichtung zur Bestimmung einer Drehzahl ($\hat{n}$) bei betragsmäßig kleinen Statorfrequenzen ($n_{\text{s}}$) einer geberlosen, feldorientiert betriebenen Drehfeldmaschine (DM) mit einer Signalverarbeitung (2), die ein vollständiges Maschinenmodell und eine Einrichtung zur Generierung von Steuersignalen ($S_a$, $S_b$, $S_c$) enthält, mit zwei Multiplizierern (36, 18), mit einem Strom-Meßglied (6) mit nachgeschalteten Koordinatenwandler (8), mit einer Vergleichereinrichtung (46), mit einer Einrichtung (44) zur Berechnung eines komplexen Faktors $\underline{K}_\omega$ und mit einem Ausgleichsregler (22), wobei der Ausgang des Koordinatenwandlers (8) und der Ausgang der Signalverarbeitung (2), an dem ein normierter Statorstrom-Modellraumzeiger

$$(\hat{\underline{y}}_{\text{s}})$$

ansteht, mit den Eingängen der Vergleichereinrichtung (46) verknüpft sind, dessen Ausgang mit einem ersten Eingang des Multiplizierers (36) verbunden ist, wobei der Ausgang der Einrichtung (44) zur Berechnung eines komplexen Faktor $\underline{K}_\omega$ mit einem zweiten Eingang des Multiplizierers (36) verknüpft ist, der ausgangsseitig mit einem ersten Eingang des nachgeschalteten Multiplizierers (18) verbunden ist, wobei dessen zweiter Eingang mit einem Ausgang der Signalverarbeitung (2) verknüpft ist, an dem der konjugiert komplexe Raumzeiger

$$(\hat{\underline{\psi}}_{\text{r}}^{*})$$

der Rotorflußverkettung als Transformations-Raumzeiger ansteht, **dadurch gekennzeichnet**, daß ein Begrenzer (66) vorgesehen ist, der ein- und ausgangsseitig jeweils mittels eines Umschalters (62,64) mit einem Ausgang des Multiplizierers (18) und mit einem Eingang des Ausgleichsreglers (22) verknüpft ist, daß eine Vorrichtung (52) zur Berechnung einer Wirkmomentdifferenz ($\Delta$m) eingangsseitig mit zwei Ausgängen der Signalverarbeitung (2) verbunden ist, an denen ein normierter Statorstrom-Modellraumzeiger

$$(\hat{\underline{y}}_{\text{s}})$$

und ein konjugiert komplexer Raumzeiger

$$(\hat{\underline{\psi}}_{\mu}^{*})$$

der Statorflußverkettung anstehen, daß ein Betragsbildner (54) mit nachgeschalteten Mittelwertbildner (56) und eine Einrichtung (58) zur Bestimmung einer Drehzahlkorrektur ($\hat{n}_k$) vorgesehen sind, wobei die Eingänge dieser Einrichtung (58) mit einem Ausgang des Betragsbildners (54), des Mittelwertbildners (56) und der Vorrichtung (52) verbunden sind, wobei der Betragsbildner (54) eingangsseitig mit einem Ausgang der Signalverarbeitung (2), an dem ein Statorfluß-Raumzeiger

$$(\hat{\underline{\psi}}_{\mu})$$

ansteht, verknüpft ist, und daß die Einrichtung (58) ausgangsseitig mit einem Eingang eines Addierers (60) verbunden ist, dessen zweiter Eingang mit einem Ausgang des Ausgleichsreglers (22) und dessen Ausgang mit einem Eingang der Signalverarbeitung (2) verknüpft sind.

8. Vorrichtung nach Anspruch 7, **dadurch gekennzeichnet**, daß die Vorrichtung (52) zur Berechnung einer Wirkmomentdifferenz ($\Delta$m) zwei Multiplizierer (110,112) und zwei Vergleicher (114,116) aufweist, wobei die ersten Ausgänge der beiden Multiplizierer (110,112) mit den Eingängen des ersten Vergleichers (114) und die zweiten Ausgänge der beiden Multiplizierer (110,112) mit den Eingängen des zweiten Vergleichers (116) verknüpft sind, und daß die ersten Eingänge der beiden Multiplizierer (110,112) mit dem Ausgang der Signalverarbeitung (2) verbunden sind, an dem ein konjugiert komplexer Raumzeiger

$$(\hat{\underline{\psi}}_{\mu}^{\star})$$

der Statorflußverkettung ansteht, wobei jeweils an einem zweiten Eingang der beiden Multiplizierer (110,112) entweder ein normierter Statorstrom-Modellraumzeiger

$$(\hat{\underline{y}}_{s})$$

oder ein normierter Statorstrom-Istraumzeiger ($\underrightarrow{y}_{s}$) ansteht.

9. Vorrichtung nach Anspruch 7, **dadurch gekennzeichnet**, daß die Einrichtung (58) zur Bestimmung einer Drehzahlkorrektur ($\hat{n}_{k}$) eingangsseitig zwei Einrichtungen (94,96) zur Ermittlung von modulationsfrequenten Wechselanteilen, die ausgangsseitig jeweils mit einem Eingang eines Multiplizierers (98) verknüpft sind, und ausgangsseitig einen integrierenden Regler (100) aufweist, der eingangsseitig mittels eines gleitenden Mittelwertfilters (102) mit dem Ausgang des Multiplizierers (98) verbunden ist.

10. Vorrichtung nach Anspruch 9, **dadurch gekennzeichnet**, daß als Einrichtung (94) zur Ermittlung eines modulationsfrequenten Wechselanteils ein Vergleicher (104) vorgesehen ist.

11. Vorrichtung nach Anspruch 9, **dadurch gekennzeichnet**, daß als Einrichtung (96) zur Ermittlung eines modulationsfrequenten Wechselanteils ein Vergleicher (108) mit einem gleitenden Mittelwertfilter (106) vorgesehen ist, wobei dieses gleitende Mittelwertfilter (106) eingangsseitig mit dem nichtinvertierenden Eingang des Vergleichers (108) und ausgangsseitig mit dem invertierenden Eingang des Vergleichers (108) verknüpft ist.

FIG 1

FIG 2

FIG 3

FIG 6

FIG 4

FIG 5